# EUROPÄISCHE PATENTSCHRIFT

(11) **EP 1 184 153 B1**
(45) Veröffentlichungstag und Bekanntmachung des Hinweises auf die Patenterteilung: **14.01.2004**
(21) Anmeldenummer: 01114631.3
(22) Anmeldetag: 19.06.2001
(51) Int. Cl.: B29C 47/00, B65H 23/32

(54) **Abzugsvorrichtung für Schlauchbahnen aus Kunststofffolie**
Haul-off apparatus for plastic tubular films
Dispositif de tirage de films tubulaires en matière plastique

(30) Priorität: 11.08.2000 DE 10040055
(43) Veröffentlichungstag der Anmeldung: 06.03.2002
(73) Patentinhaber: Windmöller & Hölscher, D-49525 Lengerich (DE)
(72) Erfinder: Höne, Michael, 49086 Osnabrück (DE); Plasswich, Franz, 28355 Bremen (DE)

(56) Entgegenhaltungen:
- EP-A- 0 873 846

## Beschreibung

Die Erfindung betrifft eine Flachlege- und Abzugsvorrichtung für eine im Blasverfahren von einem ortsfest angeordneten Folienblaskopf hergestellte Kunststoffschlauchfolienbahn nach dem Oberbegriff des Anspruchs 1.
Bei der Herstellung von Schlauchbahnen aus Kunststofffolie mit Hilfe von Blasverfahren sind Toleranzen der Foliendicke nicht zu vermeiden. Diese Toleranzen entstehen zum Beispiel aufgrund von Fertigungstoleranzen des Blaskopfes, des Extruders und Temperaturschwankungen sowie -gradienten außerhalb des Extruders. Da die extrudierten Schläuche zur Weiterverarbeitung zunächst flachgelegt und dann aufgewickelt werden, führen unvermeidbare Dickentoleranzen entlang des Umfanges des Blasfolienschlauchs zu Schwierigkeiten, da sich die vorgenannten Dickentoleranzen in dem Folienwickel addieren, sich Ringwülste bilden und das Entstehen eines zylinderförmigen Folienwickels verhindert wird.
Auf diese Weise wird die produzierte Folie geschädigt, ihre platzsparende Lagerung und spätere Weiterverarbeitung erschwert.
Zur Vermeidung der Addition der Dickentoleranzen auf dem Folienwickel werden daher sogenannte reversierende Abzugsvorrichtungen mit Luftwendestangen und Umlenkwalzen für die Schlauchbahn verwendet. Derartige Vorrichtungen sind aus der Literatur bekannt.
Zum Verschwenken der Reversierelemente (Luftwendestange oder Umlenkwalze) schlägt die EP 0 873 846 unter anderem vor, einem jeden Reversierelement einen Drehkranz und jedem Drehkranz einen eigenen Antriebsmotor zuzuordnen.
Eine solche Maßnahme setzt jedoch großen Steuerungs- oder gar Regelungsaufwand voraus, um die verschiedenen Antriebsmotoren so zu steuern, dass die Reversierbewegungen der verschiedenen Luftwendestangen und Umlenkwalzen exakt aufeinander abgestimmt sind.
Schlecht abgestimmte Reversierbewegungen der Luftwendestangen und Umlenkwalzen, die natürlich auch durch mechanische Toleranzen in der Abzugsvorrichtung selbst verursacht werden können, führen zu schwerwiegenden Nachteilen wie Faltenbildung auf der Folie oder einem Versatz der Kanten der Folie auf den Walzen. Die unterschiedlichen mechanischen Eigenschaften unterschiedlicher Folienmaterialen, von denen in erster Linie ihre Reibung an den reversierende Elementen und ihre Elastizität in diesem Zusammenhang von Bedeutung sind, erschweren die Abstimmung der Reversierbewegungen bei Folienwechseln weiter. Daher setzt eine Vorrichtung, bei der jedes reversierende Element einen eigenen Antrieb aufweist, sogar eine umfassende Regelung der Reversierbewegungen voraus, um die Bewegung der verschiedenen reversierenden Elemente auch bei der Fertigung unterschiedlicher Folienmaterialien in geeigneter Form zu synchronisieren.
Der vorliegenden Erfindung liegt daher die Aufgabe zugrunde, eine Abzugsvorrichtung der eingangs beschriebenen Art derart zu verbessern, dass sich der Aufwand an Steuer- und Regeltechnik auf ein wirtschaftlich vertretbares Maß reduziert. Dies wird dadurch erreicht, dass bei einem Einsatz von mindestens zwei Luftwendestangen und mindestens zwei Umlenkwalzen jeweils eine Luftwendestange und eine benachbarte Umlenkwalze ein Funktionspaar bilden. Bei jedem Funktionspaar sind die Umlenkwalze und die Luftwendestange mechanisch miteinander in einem festen Übersetzungsverhältnis verbunden. Das zur Verschwenkung der Reversierelemente eines jeden Funktionspaares notwendige Drehmoment wird von jeweils einem Motor aufgebracht.
Die mechanische Zwangsführung jeweils einer Umlenkwalze und jeweils einer benachbarten Luftwendestange relativ zueinander sowie die Zuordnung jeweils eines Motors zu diesen beiden Reversierelementen eines Funktionspaares gestaltet die Regelung wesentlich einfacher. Besonders vorteilhaft ist in diesem Zusammenhang die Kopplung der Bewegung der beiden reversierenden Elemente eines Funktionspaares in einem Verhältnis von 1:2, wobei auch andere Kopplungsverhältnisse bekannt sind.
Erfindungsgemäße Vorrichtungen weisen zwei oder mehrere Funktionspaare auf. Damit besteht die Möglichkeit, Schwenkbewegungen der verschiedenen Paare relativ zueinander zu variieren. So kann beispielsweise die üblicherweise erfolgende Abnahme des Schwenkwinkels verschiedener Funktionspaare in Verarbeitungsrichtung der Folie reduziert werden, um besonders empfindliche Folien schonender zu reversieren.

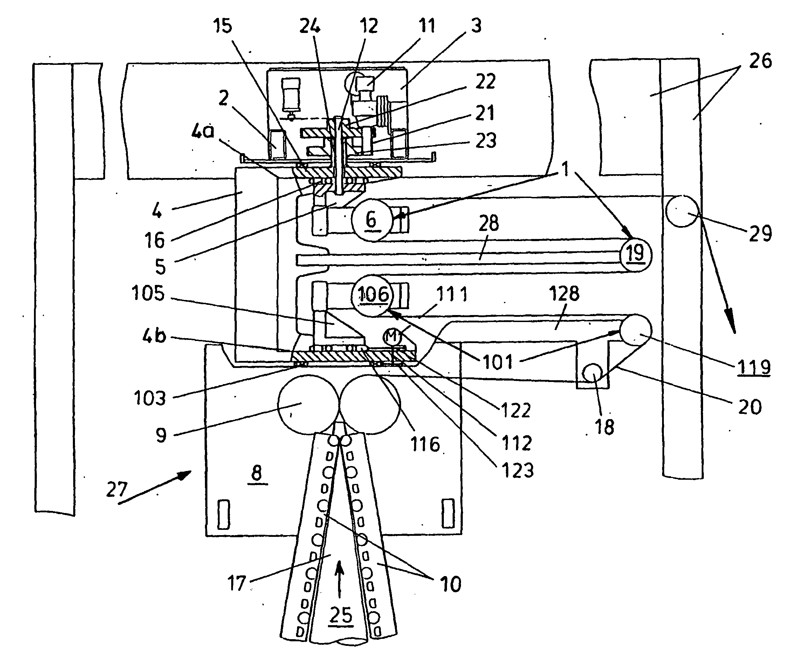

Bei der vorgeschlagenen Vorrichtung sind Verfahren dieser Art gegebenenfalls durch die individuelle Ansteuerung der den verschiedenen Funktionspaaren zugeordneten Motoren durchführbar.
Bei einer Mehrzahl von Paaren kann in einem solchen Fall eine stetige geringe Senkung des Reversierwinkels in Verarbeitungsrichtung der Folie vorgesehen werden.
Weitere Merkmale und Vorteile der Erfindung ergeben sich aus den weiteren Unteransprüchen und der nachstehenden Beschreibung in Verbindung mit den Zeichnungen, in denen Ausführungsbeispiele der Erfindung schematisch veranschaulicht werden. Die Figur zeigt:
Eine Seitenansicht einer erfindungsgemäßen Vorrichtung mit zwei Funktionspaaren aus jeweils einer Luftwendestange und jeweils einer benachbarten Umlenkwalze, wobei jedem Paar jeweils ein Motor zugeordnet ist.

In der Figur ist eine Seitenansicht einer Ausführungsform einer erfindungsgemäßen Vorrichtung mit zwei Funktionspaaren 1 und 101 gezeigt. Das feststehende Maschinengestell 26 besitzt zwei obere Querträger 2, an denen ein Getriebegehäuse 3 befestigt ist. An diesem Getriebegehäuse 3 hängt ein Drehkranz 15, der einen C-Rahmen 4 an seinem oberen frei auslaufenden Schenkel 4 trägt.

Der frei auslaufende Schenkel 4a des C-Rahmens 4 trägt über einen Drehkranz 16 die Konsole 5. Diese Konsole ist mit der oberen Luftwendestange 6 verbunden.
Die obere Umlenkwalze 19 ist über den Träger 28 mit dem C-Rahmen 4 verbunden. Mit dem unteren frei auslaufenden Schenkel 4b des C-Rahmens 4 ist die Konsole 105 mit dem Drehkranz 116 verbunden. An dieser Konsole 105 ist die untere Luftwendestange 106 befestigt. Der untere frei auslaufende Schenkel 4b trägt auch die Flachlege- und Abquetschvorrichtung 27 über den Drehkranz 103.
Die Flachlege- und Abquetschvorrichtung 27 besitzt die Tragplatten 8 als tragendes Element. Diese Tragplatten 8 tragen das Abquetschwalzenpaar 9 und die Flachlegeplatten 10. Die untere Umlenkwalze 119 und die Führungswalze 18 sind über den Träger 128 ebenfalls mit den Tragplatten 8 verbunden.
Den vier Reversierelementen dieses Ausführungsbeispiels (den zwei Luftwendestangen 6, 106 und den zwei Umlenkwalzen 19, 119) wird das für die Schwenkbewegung notwendige Drehmoment in folgender Weise vermittelt:
Der Motor 11 treibt das Ritzel 21 an, das mit den Zahnrädern 22 und 23 kämmt. Das obere Zahnrad 22 schwenkt mit Hilfe der Welle 12, die durch die Hohlwelle 24 und den oberen Schenkel 4a mit dem notwendigen Spiel hindurchgreift, die Konsole 5, so dass die mit der Konsole 5 verbundene Luftwendstange 6 in der gewünschten Weise reversiert.
Das untere Zahnrad 23 ist mit der Hohlwelle 24, die ebenfalls so gelagert ist, dass sie um ihre Hauptträgheitsachse rotieren kann, verbunden. Diese Hohlwelle 24 überträgt das Drehmoment weiter auf den C-Rahmen 4 und sorgt auf diese Weise dafür, dass der gesamte C-Rahmen 4, der über den Träger 28 mit der Umlenkwalze 19 verbunden ist, ebenfalls in der gewünschten Weise reversiert. Bei dem hier gezeigten Ausführungsbeispiel beträgt das Zähnezahlverhältnis zwischen den Zahnrädern 22 und 23 2:1.

Auf dem unteren Schenkel 4b des C-Rahmens 4 befindet sich der Motor 111, der die Welle 112 antreibt. Diese Welle 112 greift mit dem notwendigen Spiel durch den unteren Schenkel 4b hindurch. Unterhalb des Schenkels 4b ist an der Welle 112 das untere Zahnrad 123 angebracht, das mit dem Drehkranz 103 kämmt und auf diese Weise die gesamte Flachlege- und Abquetschvorrichtung 27 schwenkt. An dieser Vorrichtung sind über den Träger 128 auch die Umlenkwalze 119 und die Führungswalze 18 angebracht. Damit können auch diese beiden Walzen die gewünschte Reversierbewegung ausführen.
Die Welle 112 des Motors 111 bewegt noch ein oberes Zahnrad 122, das mit dem Drehkranz 116 kämmt. Auf diese Weise wird die Konsole 105 und die mit ihr 105 verbundene Luftwendestange 106 geschwenkt.
Das Zähnezahlverhältnis zwischen den Zahnrädern 122 und 123 und den Drehkränzen 103 und 116 ist bei dieser Ausführungsform so abgestimmt, dass die Umlenkwalze den doppelten Schwenkwinkel wie die Luftwendestange überstreicht.
Das Folienmaterial läuft in folgender Weise durch die in der Figur gezeigte Vorrichtung:
Der aufgeblasene Folienschlauch 17 läuft nachdem er den nicht dargestellten Extruder und den ebenfalls nicht.dargestellten Blaskopf bereits verlassen hat, in die Flachlege- und Abquetschvorrichtung 27 und wird dort flachgelegt.
Im weiteren Verlauf wird die flachgelegte Folienbahn 20 über eine Führungswalze 18 einer reversierenden rotierenden Umlenkwalze 119 und von dort aus einer ebenfalls reversierenden, nicht rotierenden Luftwendestange 106 zugeführt. Diese beiden Reversierelemente bilden das Funktionspaar 101, das von dem Motor 111 angetrieben beziehungsweise geschwenkt wird.
Die Folienbahn 20 läuft dann über die reversierende rotierende Umlenkwalze 19 und die reversierende, nicht rotierende Luftwendestange 6. Nachdem sie dieses obere Funktionspaar 1 durchlaufen hat, kann die Folie faltenfrei über die ortsfeste, nicht reversierende Abzugswalze 21 einem nicht gezeigtem Wickler oder einer ebenfalls nicht gezeigten direkten Weiterverarbeitung zugeführt werden.

### Bezugszeichenliste

| | | | | |
|---|---|---|---|---|
| . | Funktionspaar | 1 | 101 | |
| | oberer Querträger | 2 | | |
| | Getriebegehäuse | 3 | | |
| | Drehkranz | | 103 | |
| | C-Rahmen | 4 | | |
| | obere Schenkel | 4a | | |
| | unterer Schenkel | 4b | | |
| | Konsole | 5 | 105 | |
| | Luftwendstange | 6 | 106 | |
| | | | | |
| | parallele Platten | 8 | | |
| | Abquetschwalzenpaar | 9 | | |
| | Flachlegeplatten | 10 | | |
| | Motor | 11 | 111 | |
| | Antriebswelle | 12 | 112 | |
| | | | | |
| | | | | |
| | Drehkranz | 15 | 115 | |
| | Drehkranz | 16 | 116 | |
| | Folienschlauch | 17 | | |
| | Führungswalze | 18 | | |
| | Umlenkwalze | 19 | 119 | |
| | flachgelegte Folienbahn | 20 | | |
| | Ritzel | 21 | | |
| | oberes Zahnrad | | 122 | |
| | unteres Zahnrad | | 123 | |
| | Hohlwelle | 24 | | |
| | Verarbeitungsrichtung des Folienschlauchs | 25 | | |
| | Maschinengestell | 26 | | |
| | Flachlege- und Abquetschvorrichtung | 27 | | |
| | Träger | 28 | 128 | |
| | Abzugswalze | 29 | | |
| | | | | |

## Patentansprüche

1. Flachlege- und Abzugsvorrichtung für eine im Blasverfahren von einem ortsfest - angeordneten Folienblaskopf hergestellte Kunststoffschlauchfolienbahn,
deren Flachlegeplatten (10) und Abquetschwalzen (9) reversierend um die Achse des zugeführten Folienschlauchs (17) drehbar sind,
mit einer nachgeschalteten ortsfesten Wickel- oder Weiterverarbeitungsvorrichtung sowie
mindestens zwei reversierenden Luftwendestangen (6, 106) und mindestens zwei reversierenden Umlenkwalzen (19, 119),
**dadurch gekennzeichnet, dass**
jeweils eine reversierende, nicht rotierende Luftwendestange (6, 106) und jeweils eine benachbarte, reversierende, rotierende Umlenkwalze (19, 119) ein Funktionspaar (1, 101) bilden,
wobei jeweils einem Funktionspaar ein Motor (11, 111) zugeordnet ist.

2. Flachlege- und Abzugsvorrichtung nach Anspruch 1,
**dadurch gekennzeichnet, dass**
die ein Funktionspaar (1, 101) bildende Luftwendestange (6, 106) und Umlenkwalze (19, 119) in festem Verhältnis getrieblich miteinander verbunden sind.

3. Flachlege- und Abzugsvorrichtung nach einem der vorstehenden Ansprüche,
**dadurch gekennzeichnet, dass**
die Luftwendestange (6, 106) den halben Schwenkwinkel der demselben Funktionspaar zugeordneten Umlenkwalze (19, 119) bestreicht.

4. Flachlege- und Abzugsvorrichtung nach einem der vorstehenden Ansprüche,
**dadurch gekennzeichnet, dass**
die Funktionspaare (1, 101) an einem an sich bekannten C-Rahmen (4) angeordnet sind, der seinerseits über einen Drehkranz (15) mit dem Maschinengestell (26) verbunden ist.

5. Flachlege- und Abzugsvorrichtung nach einem der vorstehenden Ansprüche,
**dadurch gekennzeichnet, dass**
eine Konsole (5), an der die Luftwendestange (6) befestigt ist, mittels eines Drehkranzes (16) an dem oberen frei auslaufenden Schenkel (4a) des C-Rahmens 4 aufgehängt ist.

6. Flachlege- und Abzugsvorrichtung nach einem der vorstehenden Ansprüche,
**dadurch gekennzeichnet, dass**
die Drehung des C Rahmens (4) mit Hilfe einer Hohlwelle (24) erfolgt.

7. Flachlege- und Abzugsvorrichtung nach einem der vorstehenden Ansprüche,
**dadurch gekennzeichnet, dass**
die Drehung der Konsole (5), an der die Luftwendestange (6) befestigt ist, mit Hilfe einer Welle (12) erfolgt, die ihrerseits mit dem erforderlichen Spiel durch eine Hohlwelle (24) hindurchgreift.

8. Flachlege- und Abzugsvorrichtung nach einem der vorstehenden Ansprüche,
**dadurch gekennzeichnet, dass**
die Flachlege- und Abquetschvorrichtung (27) mittels eines Drehkranzes (103) an dem unteren frei auslaufenden Schenkel (4b) des C-Rahmens (4) aufgehängt ist.

9. Flachlege- und Abzugsvorrichtung nach einem der vorstehenden Ansprüche,
**dadurch gekennzeichnet, dass**
auf den unteren frei auslaufenden Schenkel (4b) des C Rahmens (4) über einen Drehkranz (116) eine Konsole (105) aufgesetzt ist, die die Luftwendestange (106) trägt.

10. Flachlege- und Abzugsvorrichtung nach einem der vorstehenden Ansprüche,
**dadurch gekennzeichnet, dass**
die mit dem unteren frei auslaufenden Schenkel (4b) verbundenen Drehkränze (103) und (116) mittels eines Motors (111) drehbar sind.

11. Flachlege- und Abzugsvorrichtung nach einem der vorstehenden Ansprüche,
**dadurch gekennzeichnet, dass**
die mit dem oberen frei auslaufenden Schenkel (4a) verbundenen Drehkränze (15) und (16) mittels eines Motors (11) drehbar sind.

12. Verfahren zum Betrieb einer Flachlege- und Abzugsvorrichtung für eine im Blasverfahren von einem ortsfest angeordneten Folienblaskopf hergestellte Kunststoffschlauchfolienbahn,
deren Flachlegeplatten (10) und Abquetschwalzen (9) reversierend um die Achse des zugeführten Folienschlauchs (17) lenkbar sind,
mit einer nachgeschalteten ortsfesten Wickel- oder Weiterverarbeitungsvorrichtung sowie mit mindestens zwei Funktionspaaren (1, 101) aus jeweils einer reversierenden Luftwendestange (6, 106) und jeweils einer reversierenden Umlenkwalze (19, 119), sowie jeweils einem dem Funktionspaar (1, 101) zugeordneten Motor (11,111)
**dadurch gekennzeichnet, dass**
die Motoren (111, 121) der unterschiedlichen Funktionspaare (1, 101) so angesteuert werden, dass die unterschiedlichen Funktionspaare (1, 101) variabel abstimmbare Drehwinkel bestreichen.

13. Verfahren nach einem der vorstehenden Ansprüche,
**dadurch gekennzeichnet, dass**
in Flachlege- und Abzugsvorrichtungen mit einer Mehrzahl von Funktionspaaren eine geringe stetige Verringerung des bestrichenen Drehwinkels der verschiedenen Funktionspaare (1, 101) in Verarbeitungsrichtung der Folienschlauchs (25) vorgesehen wird.

## Claims

1. Lay-flat and haul-off apparatus for a plastic tubular film produced in the blow-moulding process by a film blow-moulding head arranged in a fixed location,
whose lay-flat plates (10) and squeezing rolls (9) can be rotated reversibly about the axis of the tubular film (17) fed in,
having a winding or further processing apparatus arranged downstream in a fixed location and
at least two reversing air turner bars (6, 106) and at least two reversing deflection rolls (19, 119),
**characterized in that**
in each case a reversing, non-rotating air turner bar (6, 106) and in each case an adjacent, reversing, rotating deflection roll (19, 119) form a functional pair (1, 101),
in each case a motor (11, 111) being assigned to a functional pair.

2. Lay-flat and haul-off apparatus according to Claim 1, **characterized in that** the air turner bar (6, 106) and deflection roll (19, 119) forming a functional pair (1, 101) are connected mechanically to each other in a fixed relationship.

3. Lay-flat and haul-off apparatus according to one of the preceding claims, **characterized in that** the air turner bar (6, 106) sweeps over half the pivoting angle of the deflection roll (19, 119) associated with the same functional pair.

4. Lay-flat and haul-off apparatus according to one of the preceding claims, **characterized in that** the functional pairs (1, 101) are arranged on a C-frame (4) which is known per se and which in turn is connected to the machine frame (26) via a ring mount (15).

5. Lay-flat and haul-off apparatus according to one of the preceding claims, **characterized in that** a bracket (5) to which the air turner bar (6) is fixed is suspended by means of a ring mount (16) on the upper, freely cantilevered leg (4a) of the C-frame (4).

6. Lay-flat and haul-off apparatus according to one of the preceding claims, **characterized in that** the C-frame (4) is rotated with the aid of a hollow shaft (24) .

7. Lay-flat and haul-off apparatus according to one of the preceding claims, **characterized in that** the bracket (5) to which the air turner bar (6) is fixed is rotated with the aid of a shaft (12) which in turn reaches through a hollow shaft (24) with the necessary play.

8. Lay-flat and haul-off apparatus according to one of the preceding claims, **characterized in that** the lay-flat and squeezing device (27) is suspended on the lower, freely cantilevered leg (4b) of the C-frame (4) by means of a ring mount (103).

9. Lay-flat and haul-off apparatus according to one of the preceding claims, **characterized in that** a bracket (105) which carries the air turner bar (106) is fitted to the lower, freely cantilevered leg (4b) of the C-frame (4) via a ring mount (116).

10. Lay-flat and haul-off apparatus according to one of the preceding claims, **characterized in that** the ring mounts (103) and (116) connected to the lower, freely cantilevered leg (4b) can be rotated by means of a motor (111).

11. Lay-flat and haul-off apparatus according to one of the preceding claims, **characterized in that** the ring mounts (15) and (16) connected to the upper, freely cantilevered leg (4a) can be rotated by means of a motor (11).

12. Method of operating a lay-flat and haul-off apparatus for a plastic tubular film produced in the blow-moulding process by a film blow-moulding head arranged in a fixed location,
whose lay-flat plates (10) and squeezing rolls (9) can be steered reversibly about the axis of the tubular film (17) fed in,
having a winding or further processing apparatus arranged downstream in a fixed location and having at least two functional pairs (1, 101) comprising in each case a reversing air turner bar (6, 106) and in each case a reversing deflection roll (19, 119), and also in each case a motor (11, 111) assigned to the functional pair (1, 101),
**characterized in that**
the motors (111, 121) of the different functional pairs (1, 101) are driven in such a way that the different functional pairs (1, 101) sweep over rotational angles which can be coordinated in a variable manner.

13. Method according to one of the preceding claims, **characterized in that**, in lay-flat and haul-off apparatuses having a plurality of functional pairs, a slight continuous reduction in the rotational angle swept over by the various functional pairs (1, 101) is provided in the processing direction of the tubular film (25).

## Revendications

1. Dispositif de pose à plat et de dévidage pour une bande tubulaire en feuille de matière plastique fabriquée à l'aide d'une tête de soufflage de feuille fixe d'un procédé de soufflage, dont les plaques de pose à plat (10) et les cylindres d'écrasement (9) tournent en sens inverse autour de l'axe du tube en feuille (17), avec un dispositif d'enroulement ou de traitement ultérieur branché en aval ainsi qu'au moins deux tiges d'inversion pneumatique (6, 106) inverseuses et au moins deux cylindres de déviation (19, 119) inverseurs, **caractérisé en ce qu'**une tige d'inversion pneumatique (6, 106) inverseuse non rotative et un cylindre de déviation (19, 119) voisin, inverseur et rotatif constituent une paire fonctionnelle (1, 101), moyennant quoi chaque paire fonctionnelle est munie d'un moteur (11, 111).

2. Dispositif de pose à plat et de dévidage selon la revendication 1, **caractérisé en ce qu'**une tige d'inversion pneumatique (6, 106) et un cylindre de déviation (19, 119) constituant une paire fonctionnelle (1, 101) sont reliés entre eux avec un rapport fixe.

3. Dispositif de pose à plat et de dévidage selon l'une des revendications précédentes, **caractérisé en ce que** la tige d'inversion pneumatique (6, 106) parcourt la moitié de l'angle de pivotement du cylindre de déviation (19, 119) de la même paire fonctionnelle.

4. Dispositif de pose à plat et de dévidage selon l'une des revendications précédentes, **caractérisé en ce que** les paires fonctionnelles (1, 101) sont disposés sur une cadre en forme de C (4) qui est relié au châssis de la machine (26) par l'intermédiaire d'une couronne rotative (15).

5. Dispositif de pose à plat et de dévidage selon l'une des revendications précédentes, **caractérisé en ce qu'**une console (5), sur laquelle la tige d'inversion pneumatique (6) est fixée, est suspendue au montant supérieur libre (4a) du cadre en forme de C (4) à l'aide d'une couronne rotative (16).

6. Dispositif de pose à plat et de dévidage selon l'une des revendications précédentes, **caractérisé en ce que** la rotation du cadre en forme de C (4) est réalisée à l'aide d'un arbre creux (24).

7. Dispositif de pose à plat et de dévidage selon l'une des revendications précédentes, **caractérisé en ce que** la rotation de la console (5) sur laquelle la tige d'inversion pneumatique (6) est fixée, est réalisée à l'aide d'un arbre (12) qui est emboîté dans un arbre creux (24) avec un jeu approprié.

8. Dispositif de pose à plat et de dévidage selon l'une des revendications précédentes, **caractérisé en ce que** le dispositif de pose à plat et d'écrasement (27) est suspendu au montant inférieur libre (4b) du cadre en forme de C (4) à l'aide d'une couronne rotative (103).

9. Dispositif de pose à plat et de dévidage selon l'une des revendications précédentes, **caractérisé en ce que**, sur le montant inférieur libre (4b) du cadre en forme de C (4) est posée, par l'intermédiaire d'une couronne rotative (116), une console (105) qui supporte la tige d'inversion pneumatique (106) .

10. Dispositif de pose à plat et de dévidage selon l'une des revendications précédentes, **caractérisé en ce que** les couronnes rotatives (103) et (116) reliées au montant inférieur libre (4b) sont entraînées en rotation à l'aide d'un moteur (111).

11. Dispositif de pose à plat et de dévidage selon l'une des revendications précédentes, **caractérisé en ce que** les couronnes rotatives (15) et (16) reliées au montant supérieur libre (4a) sont entraînées en rotation à l'aide d'un moteur (11).

12. Procédé d'utilisation d'un dispositif de pose à plat et de dévidage pour une bande tubulaire en feuille de matière plastique fabriquée à l'aide d'une tête de soufflage de feuille fixe d'un procédé de soufflage, dont les plaques de pose à plat et les cylindres d'écrasement tournent en sens inverse autour de l'axe du tube en feuille, avec un dispositif d'enroulement ou de traitement ultérieur branché en aval ainsi qu'au moins deux paires fonctionnelles (1, 101) constituées de deux tiges d'inversion pneumatique (6, 106) inverseuses et de deux cylindres de déviation (19, 119) inverseurs, ainsi qu'un moteur (1, 101) équipant la paire fonctionnelle (1, 101), **caractérisé en ce que** les moteurs (111, 121) des différentes paires fonctionnelles (1, 101) sont commandés de telle sorte que les différentes paires fonctionnelles (1, 101) parcourent des angles de rotation réglables.

13. Procédé selon l'une des revendications précédentes, **caractérisé en ce que** dans les dispositifs de pose à plat et de dévidage avec une pluralité de paires fonctionnelles, une faible et constante diminution de l'angle de rotation parcouru par les différentes paires fonctionnelles (1, 101) est prévue dans le sens du traitement du tube en feuille (25).
